# EUROPEAN PATENT APPLICATION

(11) **EP 3 530 970 A1**
(43) Date of publication of application: **28.08.2019**
(21) Application number: 17862908.5
(22) Date of filing: 05.10.2017
(51) Int. Cl.: F16C 35/02, B60G 15/06, F16C 17/04, F16C 17/10, F16C 33/10

(54) **SLIDING BEARING**

(30) Priority: 18.10.2016 JP 2016204695
(71) Applicant: Oiles Corporation, Tokyo 108-0075 (JP); Oiles Deutschland GmbH, 61239 Ober-Moerlen (DE)
(72) Inventor: KUROSE, Kohei, Ober-Moerlen 61239 (DE); NAGASHIMA, Tsuyoshi, Ober-Moerlen 61239 (DE); HAMRODI, Robert, Ober-Moerlen 61239 (DE); SEKINE, Toshihiko, Fujisawa-shi Kanagawa 252-0811 (JP); SAITO, Katsunori, Fujisawa-shi Kanagawa 252-0811 (JP)
(74) Representative: Strehl Schübel-Hopf & Partner
(86) International application number: PCT/JP2017/036382
(87) International publication number: WO 2018/074254

(57) **Abstract**

Provided is a sliding bearing with a detent mechanism capable of being assembled by a simple operation.

A sliding bearing (1A) has, as a detent mechanism for preventing a rotational motion of a center plate (4A) relative to a lower case (3A), a plurality of V-shaped recess portions (44) and wedge-shaped projecting portions (39) equal to or less than a number of the V-shaped recess portions (44). The V-shaped recess portions (44) are formed on the lower surface (402) of the thrust bearing section (40) of the center plate (4A) so as to be circumferentially continuously aligned. The wedge-shaped projecting portions (39) are formed on the annular upper surface (331) of the annular projection (33) of the lower case (3A) so as to be aligned on a circumference having the same diameter as a circumference on which the V-shaped recess portions (44) are arranged. Each of the wedge-shaped projecting portions (39) is guided toward and fitted in any one of the V-shaped recess portions (44) to prevent a rotational motion of the center plate (4A) relative to the lower case (3A).

## Description

### Technical Field

The present invention relates to a slide bearing for supporting a load of an object of support, and in particular relates to a slide bearing for supporting a vehicle body's load on a strut type suspension (McPherson strut).

### Background Art

A strut type suspension to be used for a front whee 1 of an automobile has a structure in which a strut assembly having a piston rod and a hydraulic shock absorber is combin ed with a coil spring, thus the strut assembly rotates toget her with the coil spring in response to an operation of a ste ering. Accordingly, to support a load on the strut type susp ension while allowing a smooth rotation of the strut assembl y, a bearing is usually installed between an upper mount tha t is provoded as a mounting mechanism for mounting the strut assembly onto a vehicle body and an upper spring seat that is provided as a spring sheet for an upper end of the coil spri ng.

For example, the Patent Literature 1 discloses a slide bearing made of synthetic resin, as such a bearing for a strut type suspension. This slide bearing has the follows: an upper case with an annular lower surface, which is attached to the upper mount; a lower case with an annular upper surface facing the annular lower surface of the upper case, which is attached to the upper spring seat while being rotatable coupled with the upper case; and an annular center plate for smooth rotational motion between the upper case and the lower case. Here, the center plate is placed on the annular upper surface of the lower case, and its upper surface (that is a bearing surface) slides over the annular lower surface of the upper case.

### Citation List

### Patent Literature

Patent Literature 1: Japanese Unexamined Patent Application Laid-Open No. 2012-172814

### Summary of Invention

### Technical Problem

For such synthetic resin slide bearing, thermoplastic resin of high-compression strength, such as a glass-containing polyamide resin, is generally used as a material of the lower case for supporting a load of vehicle body, and synthetic resin excellent in sliding properties, such as a polyethylene resin, as a material of the center plate for smooth rotational motion between the upper case and the lower case. Therefore, a severe wear of the center plate may result from sliding of the center plate over the lower case with the load of the vehicle body applied, depending on combination of the material of the lower case and the material of the center plate.

Therefore, in the synthetic-resin slide bearing, a detent mechanism is used for preventing a rotational motion of the center plate relative to the lower case. The synthetic resin slide bearing described in the Patent Literature 1 is, as the detent mechanism, provided with a plurality of projecting portions equiangularly arranged at an outer edge of the annular upper surface of the lower case and the same number of radially projecting portions equiangularly arranged on an outer peripheral surface of the center plate as these projecting portions. Each of the radially-projecting portions is projecting radially outwardly and is slightly smaller in circumferential width than a gap between adjacent projecting portions. The center plate is placed on the annular upper surface of the lower case so that each of the radially-projecting portions arranged on the outer peripheral surface of the center plate can be in a gap between corresponding adjacent projecting portions arranged at the outer edge of the annular upper surface of the lower case, thereby preventing a rotational motion of the center plate relative to the lower case.

However, the detent mechanism of the synthetic resin slide bearing as described in the Patent Literature 1, requires the positioning of the center plate in relation to the lower case in such a manner that each of the radially-projecting portions arranged on the outer peripheral surface of the center plate can be in the gap between the corresponding adjacent projecting portions arranged at the outer edge of the annular upper surface of the lower case. This has a problem that the assemble operation of the sliding bearing, especially the automation of the assemble operation by the robot, is made to be difficult.

The present invention has been made in view of the above situation, and an object of the invention is to provide a slide bearing including a detent mechanism capable of being assembled by a simple operation.

### Solution to Problem

In response to the above issue, a slide bearing according to the present invention is provided with a plurality of recess portions continuously aligned in a circumferential direction and projecting portions equal to or less than a number of the recess portions, as a detent mechanism for preventing rotation of a center plate relative to any one of a lower case and an upper case. The projecting portions are aligned on a circumference having the same diameter as a diameter of a circumference on which the recess portions are aligned, and each of the projecting portions is to be fitted into any one of the recess portions. Here, the recess portions and the projecting portion may have substantial V and wedge shapes, respectively. The projecting portions each may be fitted into any one of the recess portions, upon occurrence of applying the load of the object of support to the slide bearing.

For example, the present invention provides a slide bearing for supporting a load of an object of support, including:
a center plate having a substantial annular shape,
an upper case having an annular lower surface facing an upper surface of the center plate,
a lower case having a annular upper surface facing a lower surface of the center plate, the lower case being rotatably coupled with the upper case, the center plate being interposed between the lower case and the upper case, and
a detent mechanism preventing a rotational motion of the center plate relative to at least one of the lower case and the upper case,
the detent mechanism including:
   a plurality of recess portions continuously aligned in a circumferential direction; and
   projecting portions equal to or less than a number of the recess portions, being aligned on a circumference having a same diameter as a diameter of a circumference on which the recess portions are aligned, to fit each of the projecting portions into any one of the recess portions.

Here, the slide bearing may be capable of supporting a load of a vehicle body applied to a strut type suspension while allowing a rotational motion of a strut assembly of the strut type suspension, the upper case may be attached to a mounting mechanism for mounting the strut assembly onto the vehicle body, with the strut assembly inserted thereinto, and the lower case be attached to a spring sheet at a top portion of a coil spring incorporated into to the strut assembly, with the strut assembly inserted thereinto.

### Advantageous Effects of Invention

According to the present invention, a plurality of recess portions and projecting portions equal to or less than a number of the recess portions are provided as a detent mechanism for preventing a rotational motion of the center plate relative to any one of the lower case and the upper case. The recess portions are continuously aligned in a circumferential direction, and the projecting portions are aligned on a circumference having the same diameter as a diameter of a circumference on which these recess portions are aligned, each being to be fitted into any one of the recess portions. Therefore, placement of the center plate onto the lower case and then rotatable combination of the upper case and the lower case with the center plate in between cause each of the projecting portions to be guided toward and fitted into any one of the recess portions even without positioning of the center plate in relation to the lower case or the upper case, so that prevention of a rotation of the center plate relative to the lower case or the upper case is enabled. This enables a provision of slide bearing including the detent mechanism capable of being assembled by a simple operation.

### Brief Description of Drawings

Figs. 1(A), 1(B) and 1(C) are respectively a plan view, a bottom view, and a front view, of a slide bearing 1A according to a first embodiment of the present invention, and Fig. 1(D) is an A-A cross-sectional view of the slide bearing 1A illustrated in Fig. 1(A);
Fig. 2(A) is an enlarged view of the part A of the slide bearing 1A illustrated in Fig. 1(D), and Fig. 2(B) is an enlarged view of the part B of the slide bearing 1A illustrated in Fig. 1(D);
Figs. 3(A), 3(B), and 3(C) are respectively a plan view, a bottom view, and a front view, of an upper case 2, and Fig. 3(D) is a B-B cross-sectional view of the upper case 2 illustrated in Fig. 3(A);
Figs. 4(A), 4(B), and 4(C) are respectively a plan view, a bottom view, and a front view, of a lower case 3A, and Fig. 4(D) is a C-C cross-sectional view of the lower case 3A illustrated in Fig. 4(A);
Fig. 5(A) is an enlarged view of the part C of the lower case 3A illustrated in Fig. 4(A), and Fig. 5(B) is an enlarged view of the part D of the lower case 3A illustrated in Fig. 4(D);
Figs. 6(A), 6(B), and 6(C) are respectively a plan view, a bottom view, and a front view, of a center plate 4A, and Fig. 6(D) is a D-D cross-sectional view of the center plate 4A illustrated in Fig. 6(A);
Fig. 7(A) is an enlarged view of the part E of the center plate 4A illustrated in Fig. 6(D), Fig. 7(B) is an enlarged view of the part F of the center plate 4A illustrated in Fig. 6(B), and Fig. 7(C) is an enlarged view of the part G of the center plate 4A illustrated in Fig. 6 (C) ;
Figs. 8(A), 8(B) and 8(C) are respectively a plan view, a bottom view, and a front view, of a slide bearing 1B according to a second embodiment of the present invention, and Fig. 8(D) is an E-E cross-sectional view of the slide bearing 1B illustrated in Fig. 8(A);
Fig. 9(A) is an enlarged view of the part H of the slide bearing 1B illustrated in Fig. 8(D), and Fig. 9(B) is an enlarged view of the part I of the slide bearing 1A illustrated in Fig. 8(D);
Figs. 10(A), 10(B), and 10(C) are respectively a plan view, a bottom view, and a front view, of a lower case 3B, and Fig. 10(D) is an F-F cross-sectional view of the lower case 3B illustrated in Fig. 10(A);
Fig. 11(A) is an enlarged view of the part J of the lower case 3B illustrated in Fig. 10(A), and Fig. 11(B) is an enlarged view of the part K of the lower case 3B illustrated in Fig. 10(D);
Figs. 12(A), 12(B), and 12(C) are respectively a plan view, a bottom view, and a front view, of a center plate 4B, and Fig. 12(D) is a G-G cross-sectional view of the center plate 4B illustrated in Fig. 12(A);
Fig. 13(A) is an enlarged view of the part L of the center plate 4B illustrated in Fig. 12(D), Fig. 13(B) is an enlarged view of the part M of the center plate 4B illustrated in Fig. 12(B), and Fig. 13(C) is an enlarged view of the part N of the center plate 4B illustrated in Fig. 12(C);
Fig. 14 illustrates a modification 1C of the slide bearing 1A, 1B, which includes Fig. 14 (A) as a view corresponding to Figs. 2(A) and 9(A) and Fig. 14(B) as a view corresponding to Figs. 2(B) and 9(B);
Fig. 15 illustrates a modification 1D of the slide bearing 1A, which includes Fig. 15 (A) as a view corresponding to Fig. 2(A) and Fig. 15(B) as a view corresponding to Fig. 2(B); and
Fig. 16 illustrates a modification 1E of the slide bearing 1A, which includes Fig. 16(A) as a view corresponding to Fig. 2(A) and Fig. 16(B) as a view corresponding to Fig. 2(B).

### Description of Embodiments

In the following, one embodiment of the present invention will be described referring to the drawings.

### [first embodiment]

Firstly, a first embodiment according to the present invention will be described.

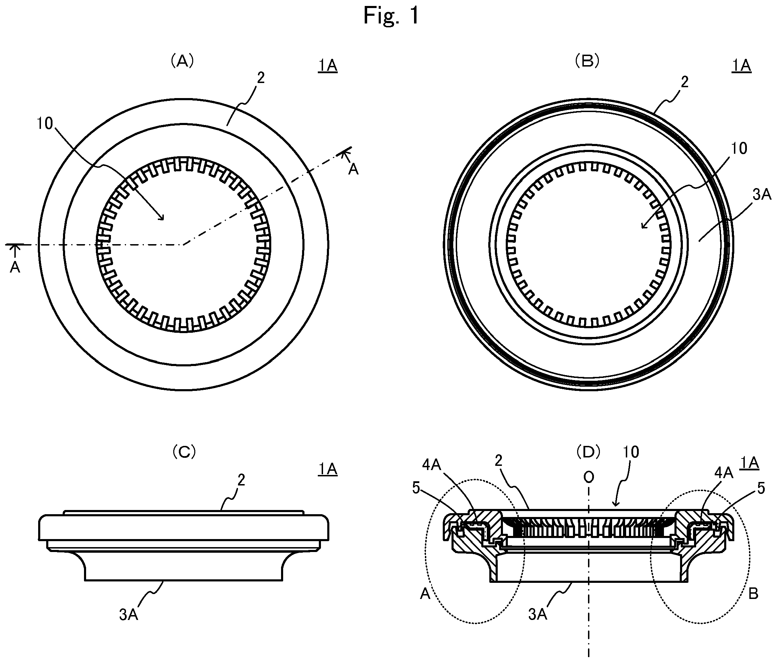

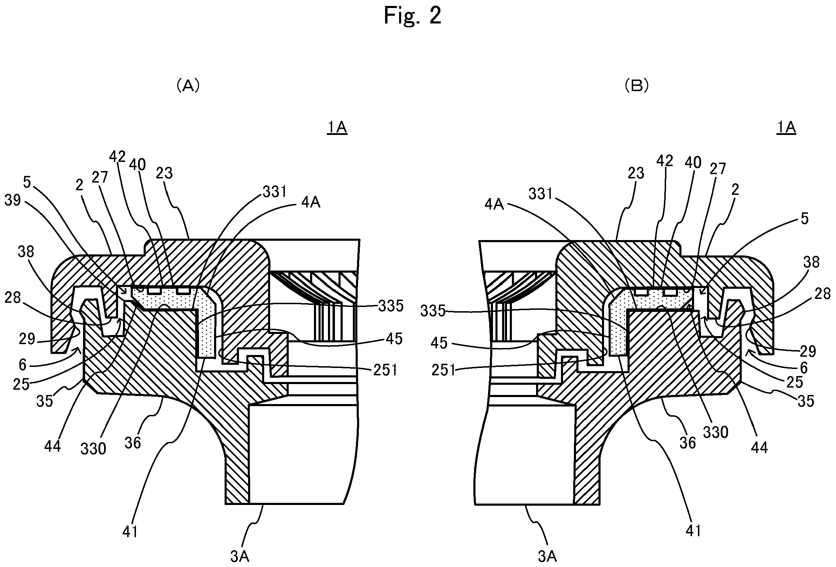

Figs. 1(A), 1(B), and 1(C) are respectively a plan view, a bottom view, and a front view, of a slide bearing 1A according to the present embodiment, and Fig. 1(D) is an A-A cross-sectional view of the slide bearing 1A illustrated in Fig. 1(A). Fig. 2(A) is an enlarged view of the part A of the slide bearing 1A illustrated in Fig. 1(D), and Fig. 2(B) is an enlarged view of the part B of the slide bearing 1A illustrated in Fig. 1(D).

The slide bearing 1A according to the present embodiment, includes a receiving hole 10 for receiving a strut assembly (not illustrated) of a strut type suspension and is capable of supporting a load of a vehicle body on the strut type suspension while allowing a rotational motion of the strut assembly received in this receiving hole 10. As illustrated in the figures, the slide bearing 1A has the following: an upper case 2; a lower case 3A rotatably combined with the upper case 2 so as to form an annular space 5 between this case 3A and the upper case 2; a center plate 4A placed in this annular space 5; and lubricating grease, although not illustrated, filled in the annular space 5.

The upper case 2 is made of thermoplastic resin excellent in sliding properties, such as polyacetal resin impregnated with lubricating oil as necessary. The upper case 2 is, with the strut assembly of the strut type suspension inserted therein, attached to an upper support (not illustrated) serving as a mounting mechanism for mounting this strut assembly onto the vehicle body.

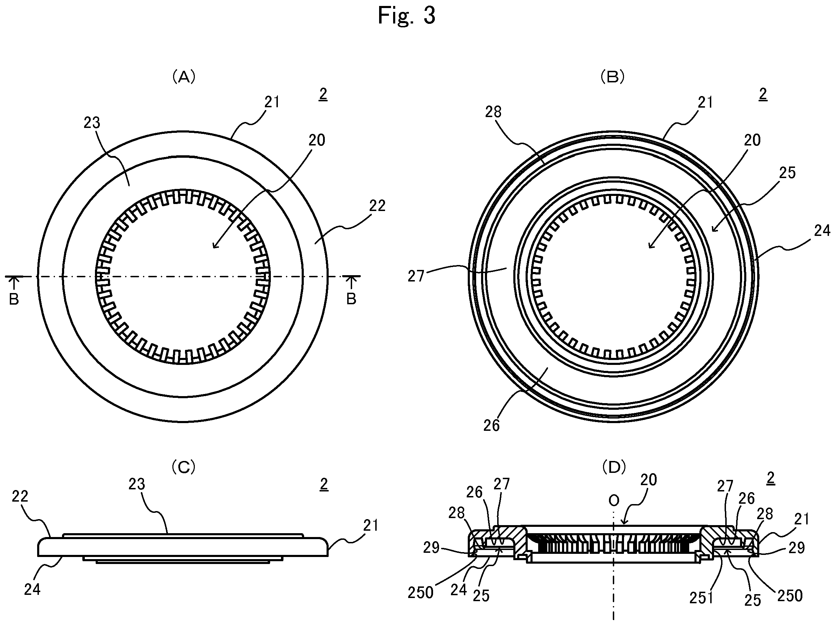

Figs. 3(A), 3(B), and 3(C) are respectively a plan view, a bottom view, and a front view, of the upper case 2, and Fig. 3(D) is a B-B cross-sectional view of the upper case 2 illustrated in Fig. 3(A).

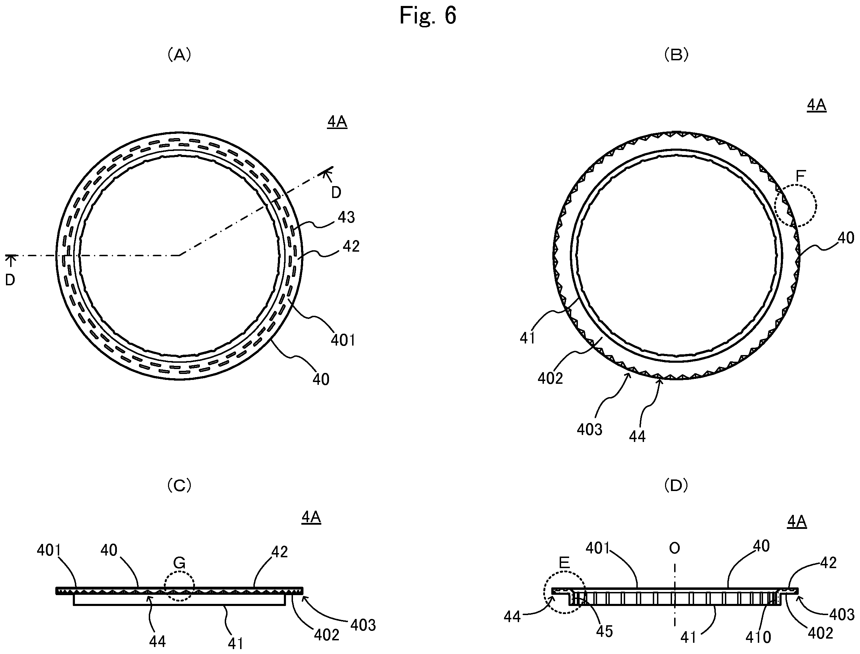

As illustrated in the figure, the upper case 2 has the following; an annular upper case body 21 including an insertion hole 20 for inserting the strut assembly; an attachment surface 23 formed in an upper surface 22 of the upper case body 21 so as to be attached to the upper support; an annular groove 25 formed on a lower surface 24 of the upper case body 21 facing the lower case 3A and rotatably combined with the lower case 3A to form the annular space 5; an annular lower surface 27 formed in a groove bottom 26 of the annular groove 25 and facing an upper surface (thrust bearing surface) 401 (See Fig. 6) of a thrust bearing part 40 as described below, of the center plate 4A; and a snap fitting part 29 for fitting the upper case 2 to the lower case 3A.

The snap fitting part 29 is provided on an outer peripheral surface 250 of the annular groove 25 and protrudes radially inwardly so as to interlock with an interlocked part 38 (See Fig. 2) of the lower case 3A.

In the groove bottom 26 of the annular groove 25, an annular protective wall 28 protruding axially downwardly from the groove bottom 26, is formed on an outer-circumference side of the annular lower surface 27. This protective wall 28 surrounds an outer circumference of the upper surface 401 of the thrust bearing part 40 of the center plate 4A placed in the annular space 5 and prevents the lubricating grease filled in the annular space 5 from being push radially outwardly out of on the upper surface 401 of the thrust bearing part 40 of the center plate 4A when a load is applied to the strut type suspension.

The lower case 3A is of a resin molded product made of thermoplastic resin of high compression strength, such as glass-containing polyamide resin, and is, with the strut assembly of the strut type suspension inserted therein, attached to an upper spring seat (not illustrated) that is a spring sheet at a top of a coil spring (not illustrated) of the strut type suspension.

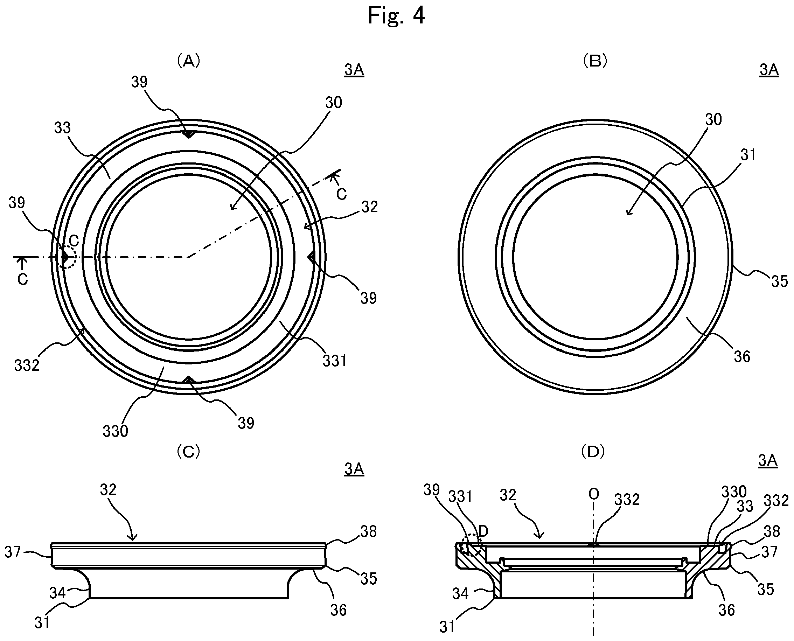

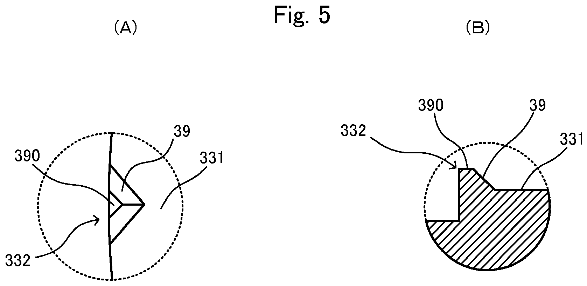

Figs. 4(A), 4(B), and 4(C) are respectively a plan view, a bottom view, and a front view, of the lower case 3A, and Fig. 4(D) is a C-C cross-sectional view of the lower case 3A illustrated in Fig. 4(A). Fig. 5(A) is an enlarged view of the part C of the lower case 3A illustrated in Fig. 4(A), and Fig. 5(B) is an enlarged view of the part D of the lower case 3A illustrated in Fig. 4(D).

As illustrated in the figures, the lower case 3A has the following: a lower case body 31 in substantial cylindrical shape, including an insertion hole 30 for inserting the strut assembly; an annular projection 33 formed on an upper surface 32 of the lower case body 31 facing the upper case 2, and capable of being inserted into the annular groove 25 formed on the lower surface 24 of the upper case body 21 of the upper case 2 to form the annular space 5 when the lower case 3A is rotatably combined with the upper case 2; and a flange 35 projecting radially outwardly from an outer peripheral surface 34 of the lower case body 31 in upper-surface 32 side of the lower case body 31.

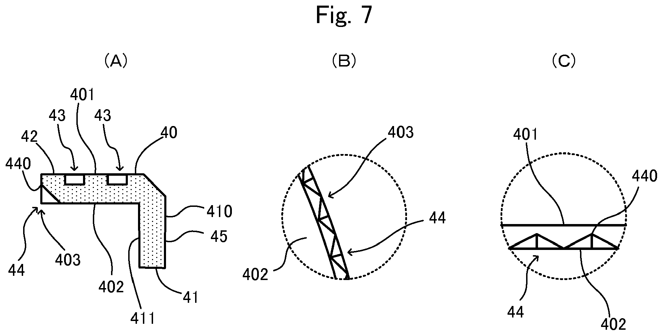

An annular upper surface 331 is formed on an upper surface 330 of the annular projection 33 so as to face a lower surface 402 (See Figs. 6 and 7) of the thrust bearing part 40 of the center plate 4A. Moreover, a plurality of wedge-shaped projecting portions 39 are formed on an outer peripheral edge 332 of this annular upper surface 331 at equal intervals in a circumferential direction.

A plurality of the wedge-shaped projecting portions 39, together with a plurality of V-shaped recess portions 44 as described below (See Figs. 6 and 7) of the center plate 4A, form a detent mechanism for preventing rotation of the center plate 4A relative to the lower case 3A. These wedge-shaped projecting portions 39 each have a triangle shape in radial cross-section and reduces in the radial cross-sectional area toward its own top portion 390. The center plate 4A is placed onto the annular upper surface 331 of the annular projection 33 of the lower case 3A and then the upper case 2 and the lower case 3A with the center plate 4A in between are rotatably combined, and thereby each of the wedge-shaped projecting portions 39 is guided toward and fitted into any one of the V-shaped recess portions 44 of the center plate 4A. In this case, four wedge-shaped projecting portions 39 are circumferentially arranged at equal intervals; however, any number of the wedge-shaped projecting portions 39 may be used, so long as these are equal to or less than a number of the V-shaped recess portions 44 of the center plate 4A.

When the lower case 3A is rotatably combined with the upper case 2, the flange 35, together with the annular projection 33, is inserted into the annular groove 25 formed on the lower surface 24 of the upper case body 21 of the upper case 2. An interlocked part 38 is formed on an outer peripheral surface 37 of the flange 35 so as to be interlocked with the snap fitting part 29 of the upper case 2. This interlocked part 38 forms a labyrinth 6 together with the snap fitting part 29 of the upper case 2 to prevent intrusion of external foreign matters, such as dust, into the annular space 5. The upper spring seat can be attached to a lower surface 36 of the flange 35.

The center plate 4A is made of synthetic resin excellent in sliding properties, such as polyethylene resin impregnated with a lubricating oil as necessary, and is capable of supporting a load of the vehicle body applied to the strut type suspension and transmitted to the upper case 2 while allowing a free rotational motion between the upper case 2 and the lower case 3A.

Figs. 6(A), 6(B), and 6(C) are respectively a plan view, a bottom view, and a front view, of the center plate 4A, and Fig. 6(D) is a D-D cross-sectional view of the center plate 4A illustrated in Fig. 6 (A). Fig. 7(A) is an enlarged view of the part E of the center plate 4A illustrated in Fig. 6(D), Fig. 7(B) is an enlarged view of the part F of the center plate 4A illustrated in Fig. 6(B), and Fig. 7(C) is an enlarged view of the part G of the center plate 4A illustrated in Fig. 6(C).

As illustrated in the figures, the center plate 4A has the following: the annular thrust bearing part 40; and a radial bearing part 41 in a substantial cylindrical shape, which is integrally formed with the thrust bearing part 40 so as to project axially downwardly from an inner edge of the thrust bearing part 40.

The thrust bearing part 40 includes a thrust bearing surface 42 formed on the upper surface 401. When the center plate 4A is placed onto the lower case 3A so that the lower surface 402 of the thrust bearing part 40 and the annular upper surface 331 of the annular projection 33 of the lower case 3A are in contact with each other, the thrust bearing surface 42 slides over the annular lower surface 27 of the annular groove 25 of the upper case 2. A plurality of depressed grease reservoirs 43 are formed on this thrust bearing surface 42 so as to be circumferentially arranged.

A plurality of the V-shaped recess portions 44 are formed at an outer peripheral edge portion 403 of the lower surface 402 of the thrust bearing part 40 so as to be continuously aligned in a circumferential direction. A plurality of the V-shaped recess portions 44 are aligned on a circumference having the same diameter as that of a circumference on which a plurality of the wedge-shaped projecting portions 39 formed on the upper surface 330 of the annular projection 33 of the lower case 3A locate, thus forming a detent mechanism together with these wedge-shaped projecting portions 39 so as to prevent a rotational motion of the center plate 4A relative to the lower case 3A. The V-shaped recess portions 44 each have a triangle shape in radial cross-section and reduces in the radial cross-sectional area toward its own bottom portion 440. The center plate 4A is placed onto the annular upper surface 331 of the annular projection 33 of the lower case 3A, and then the upper case 2 and the lower case 3A with the center plate 4A in between are rotatably combined; consequently, each of the wedge-shaped projecting portions 39 of the lower case 3A is guided toward and fitted into any one of the V-shaped recess portions 44.

The radial bearing part 41 includes a radial bearing surface 45 formed on an inner peripheral surface 410. When the center plate 4A is placed onto the lower case 3A so that the lower surface 402 of the thrust bearing part 40 and the annular upper surface 331 of the annular projection 33 of the lower case 3A contact with each other, the radial bearing part 41 is inserted into inside of this annular projection 33 and the radial bearing surface 45 slides over an inner peripheral surface (an outer peripheral surface of the upper case 2) 251 of the annular groove 25 of the upper case body 21.

In the slide bearing 1A with the above structure, according to the present embodiment, placement of the center plate 4A onto the annular upper surface 331 of the annular projection 33 of the lower case 3A and then rotatable combination of the upper case 2 and the lower case 3A with the center plate 4A in between cause each of the wedge-shaped projecting portions 39 formed on the annular upper surface 331 of the annular projection 33 of the lower case 3A to be guided toward and fitted into any one of the V-shaped recess portions 44 formed on the lower surface 402 of the thrust bearing part 40 of the center plate 4A placed on this annular upper surface 331. Because of use of the wedge-shaped projecting portions 39 each having a wedge-shaped protruded shape and the V-shaped recess portions 44 each having a V-shaped depressed shape as the detent mechanism, the occurrence of applying the load of the vehicle body to the sliding bearing 1A further strengthens the fit of the two 39, 44. This prevents a rotational motion of the center plate 4A relative to the lower case 3A. Under such conditions, the thrust bearing surface 42 formed on the upper surface 401 of the thrust bearing part 40 of the center plate 4A and the annular lower surface 27 of the annular groove 25 of the upper case 2 slide each other with the interposition of the lubricating grease filled in the annular space 5. The radial bearing part 41 of the center plate 4A is inserted to the inside of the annular projection 33 of the lower case 3A, and the radial bearing surface 45 of the radial bearing part 41 slides over the inner peripheral surface 251 of the annular groove 25 of the upper case 2. Therefore, the slide bearing 1A is supported by both of the upper spring seat attached to the lower surface 36 of the flange 35 of the lower case 3A and the coil spring of the strut type suspension, thus supporting the load of the vehicle body applied to the strut type suspension and transmitted to the upper case 2 while allowing a rotational motion between the upper case 2 and the lower case 3A.

Hereinabove, the first embodiment of the present invention has been described.

In the present embodiment, a plurality of V-shaped recess portions 44 and the wedge-shaped projecting portions 39 equal to or less than a number of the V-shaped recess portions 44, are provided as the detent mechanism for preventing a rotational motion of the center plate 4A relative to the lower case 3A. The V-shaped recess portions 44 are formed on the lower surface 402 of the thrust bearing part 40 of the center plate 4A so as to be continuously aligned in a circumferential direction, and the wedge-shaped projecting portions 39 are formed on the annular upper surface 331 of the annular projection 33 of the lower case 3A so as to be aligned on a circumference with the same diameter as a circumference on which the V-shaped recess portions 44 are aligned, each being to be fitted into any one of the V-shaped recess portions 44. Therefore, placement of the center plate 4A onto the annular upper surface 331 of the annular projection 33 of the lower case 3A and then rotatable combination of the upper case 2 and the lower case 3A with the center plate 4A in between cause each of the wedge-shaped projecting portions 39 to be guided toward and fitted into any one of the V-shaped recess portions 44 even without positioning of the center plate 4A in relation to the lower case 3A, resulting in preventing a rotation of the center plate 4A relative to the lower case 3A. Therefore, according to the present embodiment, provided is the slide bearing 1A which includes the detent mechanism capable of being assembled by a simple operation.

In the present embodiment, as the wedge-shaped projecting portions 39 each having a wedge-shaped protruded shape and the V-shaped recess portions 44 each having a V-shaped depressed shape are used as the detent mechanism, the occurrence of applying the load of the vehicle body to the slide bearing 1A further strengthens the fit of the two 39, 44. Therefore, the present embodiment ensures a prevention of a rotation of the center plate 4A relative to the lower case 3A when the load of the vehicle body is applied to the slide bearing 1A.

In the present embodiment, the center plate 4A is provided with the radial bearing part 41 in substantial cylindrical shape formed integrally with the thrust bearing part 40 so as to project axially downwardly from the inner edge of the thrust bearing part 40, and thereby the radial bearing surface 45 is slid over the inner peripheral surface 251 of the annular groove 25 of the upper case 2. Therefore, according to the present embodiment, in addition to thrust component of a load of the vehicle body on the strut type suspension, a radial component of the load can also be supported while a rotation between the upper case 2 and the lower case 3A is allowed.

In the present embodiment, as the grease reservoirs 43 is formed on the thrust bearing surface 42 of the thrust bearing part 40 of the center plate 4A, the thrust bearing surface 42 can hold more lubricating grease thereon. Therefore, according to the present embodiment, the thrust bearing surface 42 can be covered with a lubricating grease film, and thereby the load of the vehicle body on the strut type suspension can be supported while a smooth rotational motion of the strut assembly of the strut type suspension is allowed, over a long period.

In the present embodiment, the groove bottom 26 of the annular groove 25 of the upper case 2 is provided with the annular protective wall 28 surrounding the outer circumference of the thrust bearing part 40 of the center plate 4A placed in the annular space 5 formed by the combination of the upper case 2 and the lower case 3A. This protective wall 28 prevents the lubricating grease filled in the annular space 5 from being forced radially outwardly out of on the thrust bearing surface 42 of the thrust bearing part 40 when a load is applied to the strut type suspension. This allows the lubricating grease film to cover the thrust bearing surface 42 more certainly. Therefore, according to the present embodiment, the load of the vehicle body on the strut type suspension can be supported while a smooth rotational motion of the strut assembly of the strut type suspension is allowed, over a long period.

In the present embodiment, a plurality of the V-shaped recess portions 44 are formed on the lower surface 402 of the thrust bearing part 40 of the center plate 4A and the wedge-shaped projecting portions 39 equal to or less than a number of the V-shaped recess portions 44 are formed on the annular upper surface 331 of the annular projection 33 of the lower case 3A, as the detent mechanism for preventing a rotational motion of the center plate 4A relative to the lower case 3A. The present invention can include, but is not limited to, this structure. A detent mechanism to be provided for preventing a rotation of the center plate 4A relative to the lower case 3A may be formed as follows: a plurality of the V-shaped recess portions 44 are formed on the annular upper surface 331 of the annular projection 33 of the lower case 3A so as to be continuously aligned in circumferential direction; and the wedge-shaped projecting portions 39 equal to or less than the number of the V-shaped recess portions 44 are formed on the lower surface 402 of the thrust bearing part 40 of the center plate 4A so as to be aligned on a circumference with the same diameter as a circumference on which the V-shaped recess portions 44 are aligned, thus each being to be fitted into any one of the V-shaped recess portions 44.

In the present embodiment, the detent mechanism is provided in order to preventing a rotational motion of the center plate 4A relative to the lower case 3A. The present invention can include, but is not limited to, this structure. For example, thermoplastic resin of high-compression strength, such as a glass-containing polyamide resin, may be used for the upper case 2, thermoplastic resin excellent in sliding properties, such as a polyacetal resin impregnated with a lubricating oil as necessary, for the lower case 3A, and furthermore, a detent mechanism may be provided in order to providing a rotation of the center plate 4A relative to the upper case 2.

For this case, the thrust bearing surface 42 is formed on the lower surface 402 of the thrust bearing part 40 of the center plate 4A, and the radial bearing surface 45 is formed on an outer peripheral surface 411 of the radial bearing part 41. A plurality of the V-shaped recess portions 44 may be formed on the upper surface 401 of the thrust bearing part 40 so as to be continuously aligned in a circumferential direction, and the wedge-shaped projecting portions 39 equal to or less than a number of the V-shaped recess portions 44 may be formed on the annular lower surface 27 of the annular groove 25 of the upper case 2 so as to be aligned on a circumference with the same diameter as a circumference on which the V-shaped recess portions 44 are aligned, thus each being to be fitted into any one of the V-shaped recess portions 44.

Alternatively, a plurality of the V-shaped recess portions 44 may be formed on the annular lower surface 27 of the annular groove 25 of the upper case 2 so as to be continuously aligned in a circumferential direction, and the wedge-shaped projecting portions 39 equal to or less than a number of the V-shaped recess portions 44 may be formed on the upper surface 401 of the thrust bearing part 40 so as to be aligned on a circumference with the same diameter as circumference on which the V-shaped recess portions 44 are aligned, thus being to be fitted into any one of the V-shaped recess portions 44.

Such configurations cause each of the wedge-shaped projecting portions 39 to be guided toward and fitted into any one of V-shaped recess portions 44 even without positioning of the center plate 4A in relation to the upper case 2, resulting from placement of the center plate 4A onto the annular upper surface 331 of the annular projection 33 of the lower case 3A and then rotatable combination of the upper case 2 and the lower case 3A with the center plate 4A in between. Thus prevented is a rotational motion of the center plate 4A relative to the upper case 2.

### [second embodiment]

Secondly, a second embodiment according to the present invention will be described.

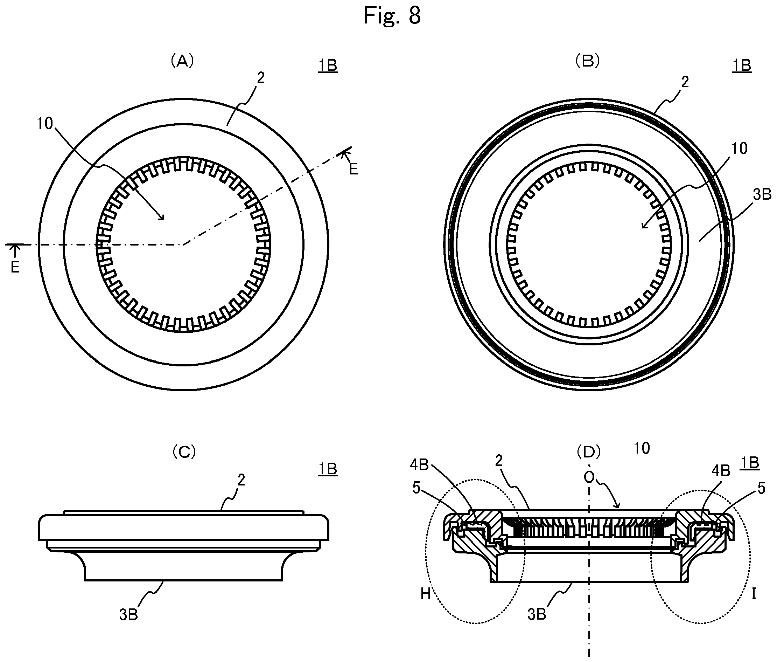

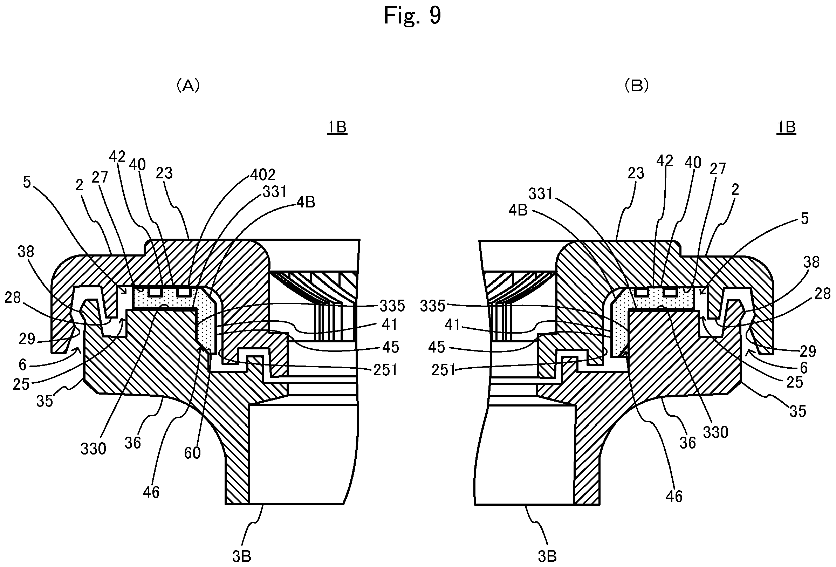

Figs. 8(A), 8(B) and 8(C) are respectively a plan view, a bottom view, and a front view, of a slide bearing 1B according to the present embodiment, and Fig. 8(D) is an E-E cross-sectional view of the slide bearing 1B illustrated in Fig. 8(A). Fig. 9(A) is an enlarged view of the part H of the slide bearing 1B illustrated in Fig. 8(D), and Fig. 9 (B) is an enlarged view of the part I of the slide bearing 1A in Fig. 8(D).

In the slide bearing 1B according to the present embodiment, each component having the same function as any component in the slide bearing 1A according to the first embodiment of the present invention is indicated by the same reference symbols.

The slide bearing 1B according to the present embodiment, includes a receiving hole 10 for receiving a strut assembly (not illustrated) of a strut type suspension and is capable of supporting a load of a vehicle body on the strut type suspension while allowing a rotational motion of the strut assembly received in this receiving hole 10. As illustrated in the figures, the slide bearing 1B has an upper case 2, a lower case 3B rotatably combined with the upper case 2 to form an annular space 5 between the case 3B and the upper case 2, a center plate 4B placed in this annular space 5, and lubricating grease filled in the annular space 5 although not illustrated.

The upper case 2 is made of thermoplastic resin excellent in sliding properties, such as a polyacetal resin impregnated with a lubricating oil as necessary. The upper case 2 is, with the strut assembly of the strut type suspension inserted therein, attached to an upper support (not illustrated) serving as a mounting mechanism for mounting this strut assembly onto the vehicle body. This upper case 2 is identical to the foregoing used in the slide bearing 1A according to the first embodiment of the present invention, and therefore detail of the upper case 2 will not be elaborated upon here.

The lower case 3B is of a resin molded product made of thermoplastic resin of high compression strength, such as a glass-containing polyamide resin, and is, with the strut assembly of the strut type suspension inserted in the case 3A, attached to an upper spring seat (not illustrated) that is a spring sheet at a top of a coil spring (not illustrated) of the strut type suspension.

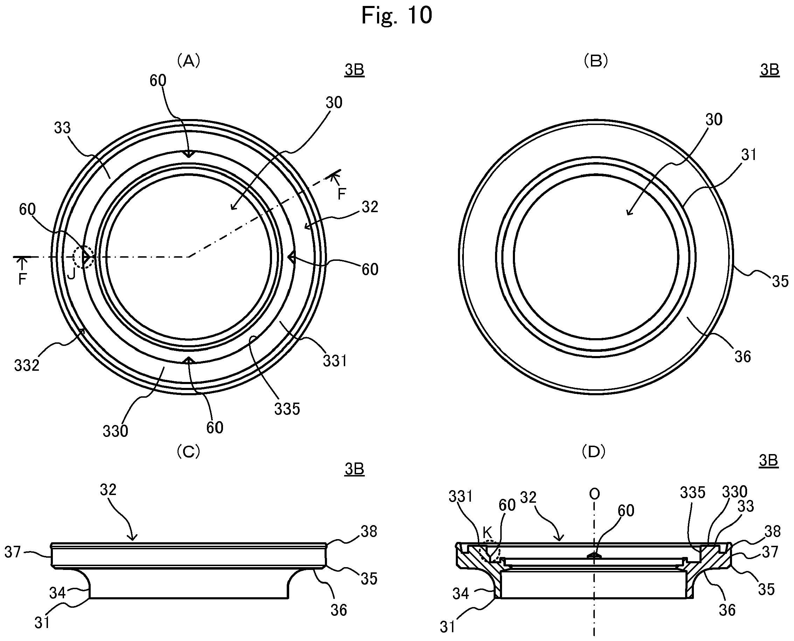

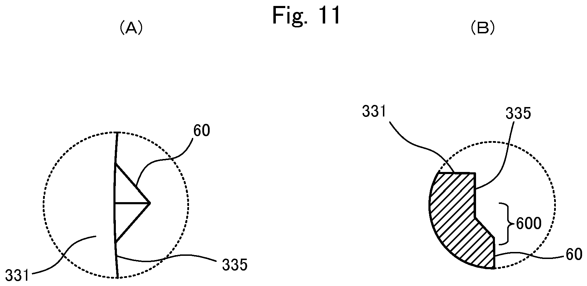

Figs. 10(A), 10(B), and 10(C) are respectively a plan view, a bottom view, and a front view, of the lower case 3B, and Fig. 10 (D) is an F-F cross-sectional view of the lower case 3B illustrated in Fig. 10 (A). Fig. 11 (A) is an enlarged view of the part J of the lower case 3B illustrated in Fig. 10(A), and Fig. 11(B) is an enlarged view of the part K of the lower case 3B illustrated in Fig. 10(D).

As illustrated in the figures, the lower case 3B has the following: a lower case body 31 in substantial cylindrical shape, including an insertion hole 30 for an insertion of the strut assembly; an annular projection 33 formed on an upper surface 32 of the lower case body 31 facing the upper case 2, and capable of being inserted into an annular groove 25 formed on a lower surface 24 of a upper case body 21 of the upper case 2 to form the annular space 5 when the lower case 3B is rotatably combined with the upper case 2; and a flange 35 projecting radially outwardly from an outer peripheral surface 34 of the lower case body 31 in upper surface 32 side of the lower case body 31.

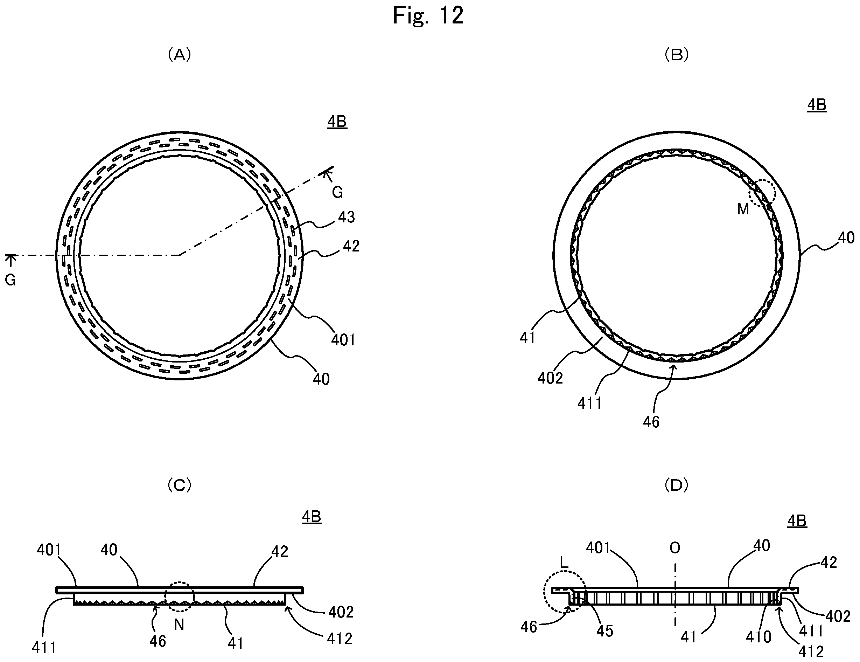

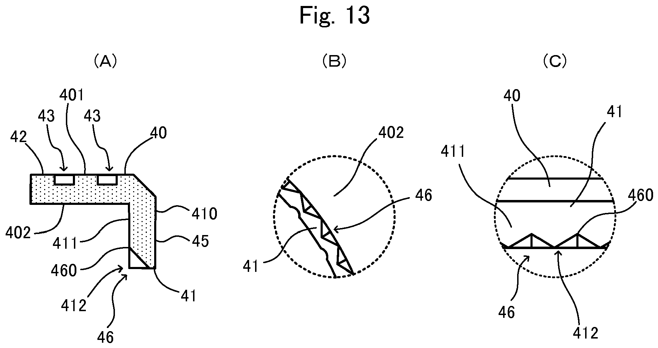

An annular upper surface 331 is formed on an upper surface 330 of the annular projection 33 so as to face a lower surface 402 of a thrust bearing part 40 (See Figs. 12 and 13) of the center plate 4B. Moreover, a plurality of wedge-shaped projecting portions 60 are formed on an inner peripheral surface 335 of the annular projection 33 at equal intervals in a circumferential direction.

A plurality of the wedge-shaped projecting portions 60, together with a plurality of V-shaped recess portions 46 as described below (See Figs. 12 and 13) of the center plate 4B, form a detent mechanism for preventing a rotational motion of the center plate 4B relative to the lower case 3B. These wedge-shaped projecting portions 60 each have a triangle shape in radial cross-section and its own end part 600 closer to the annular upper surface 331 reduces in the radial cross-sectional area toward the annular upper surface 331. The center plate 4B is placed on the annular upper surface 331 of the annular projection 33 of the lower case 3B and then the upper case 2 and the lower case 3B with the center plate 4B in between are rotatably combined, and thereby each of the wedge-shaped projecting portions 60 is guided toward and fitted into any one of the V-shaped recess portions 46 of the center plate 4B. In this case, four wedge-shaped projecting portions 60 are provided at equal intervals in a circumferential direction, however, any number of the wedge-shaped projecting portions 60 may be used, so long as these are equal to or less than a number of the V-shaped recess portions 46 of the center plate 4B.

When the lower case 3B is rotatably combined with the upper case 2, the flange 35, together with the annular projection 33, is inserted into the annular groove 25 formed on the lower surface 24 of the upper case body 21 of the upper case 2. An interlocked part 38 to be interlocked with a snap fitting part 29 of the upper case 2, is formed on an outer peripheral surface 37 of the flange 35. This interlocked part 38 forms a labyrinth 6 together with the snap fitting part 29 of the upper case 2 to prevent intrusion of external foreign matters, such as dust, into the annular space 5. The upper spring seat can be attached to a lower surface 36 of the flange 35.

The center plate 4B is made of synthetic resin excellent in sliding properties, such as polyethylene resin impregnated with a lubricating oil as necessary, and supports the load of the vehicle body applied to the strut type suspension and transmitted to the upper case 2 while allowing a free rotational motion between the upper case 2 and the lower case 3B.

Figs. 12 (A), 12 (B), and 12 (C) are respectively a plan view, a bottom view, and a front view of the center plate 4B, Fig. 12 (D) is a G-G cross-sectional view of the center plate 4B illustrated in Fig. 12(A). Fig. 13(A) is an enlarged view of the part L of the center plate 4B illustrated in Fig. 12(D), Fig. 13(B) is an enlarged view of the part M of the center plate 4B illustrated in Fig. 12(B), and Fig. 13(C) is an enlarged view of the part N of the center plate 4B illustrated in Fig. 12(C).

As illustrated in the figures, the center plate 4B has the following: the annular thrust bearing part 40; and a radial bearing part 41 in a substantial cylindrical shape, which is formed integrally with the thrust bearing part 40 so as to project axially downwardly from an inner edge of the thrust bearing part 40.

The thrust bearing part 40 includes a thrust bearing surface 42 formed on an upper surface 401. When the center plate 4B is placed onto the lower case 3B so that the lower surface 402 of the thrust bearing part 40 and the annular upper surface 331 of the annular projection 33 of the lower case 3B are in contact with each other, the thrust bearing surface 42 slides over an annular lower surface 27 of the annular groove 25 of the upper case 2. A plurality of depressed grease-reservoirs 43 are formed on this thrust bearing surface 42 so as to be circumferentially arranged.

The radial bearing part 41 includes a radial bearing surface 45 formed on an inner peripheral surface 410. When the center plate 4B is placed onto the lower case 3B so that the lower surface 402 of the thrust bearing part 40 and the annular upper surface 331 of the annular projection 33 of the lower case 3B are in contact with each other, the radial bearing part 41 is inserted in inside of this annular projection 33 and the radial bearing surface 45 slides over an inner peripheral surface 251 of the annular groove 25 of the upper case 2.

A plurality of V-shaped recess portions 46 are formed on a lower end portion 412 of an outer peripheral surface 411 of the radial bearing part 41 so as to be continuously aligned in a circumferential direction. A plurality of the V-shaped recess portions 46 are aligned on a circumference having the same diameter as a circumference on which a plurality of the wedge-shaped projecting portions 60 formed on the inner peripheral surface 335 of the annular projection 33 of the lower case 3B locate, thereby forming the detent mechanism together with these wedge-shaped projecting portions 60 so as to prevent a rotational motion of the center plate 4B relative to the lower case 3B. These V-shaped recess portions 46 each have a triangle shape and reduces in the radial cross-sectional area toward its own bottom portion 460. The center plate 4B is placed onto the annular upper surface 331 of the annular projection 33 of the lower case 3B, and then the upper case 2 and the lower case 3B with the center plate 4B in between are rotatably combined; consequently, each of the wedge-shaped projecting portions 60 of the lower case 3B is guided toward and fitted into any one of the V-shaped recess portions 46.

In the slide bearing 1B with the above configuration, according to the present embodiment, placement of the center plate 4B onto the annular upper surface 331 of the annular projection 33 of the lower case 3B and then rotatable combination of the upper case 2 and the lower case 3B with the center plate 4B in between cause each of the wedge-shaped projecting portions 60 formed on the inner peripheral surface 335 of the annular projection 33 of the lower case 3B to be guided toward and fitted into any one of the V-shaped recess portions 46 on the outer peripheral surface 411 of the radial bearing part 41 of the center plate 4B placed on this annular upper surface 331. Because of use of the wedge-shaped projecting portions 60 each having a wedge-shaped protruded shape and the V-shaped recess portions 46 each having a V-shaped depressed shape as the detent mechanism, the occurrence of applying the load of the vehicle body to the slide bearing 1B further strengthens the fit of the two 60, 46. This prevents a rotational motion of the center plate 4B relative to the lower case 3B. Under such conditions, the thrust bearing surface 42 formed on the upper surface 401 of the thrust bearing part 40 of the center plate 4B and the annular lower surface 27 of the annular groove 25 of the upper case 2 slide each other with the interposition of the lubricating grease filled in the annular space 5. The radial bearing part 41 of the center plate 4B is inserted into the inside of the annular projection 33 of the lower case 3B, and the radial bearing surface 45 of the radial bearing part 41 slides over the inner peripheral surface 251 of the annular groove 25 of the upper case 2. Consequently, the slide bearing 1B is supported by both of the upper spring seat attached to the lower surface 36 of the flange 35 of the lower case 3B and the coil spring of the strut type suspension, thus supporting the load of the vehicle body applied to the strut type suspension and transmitted to the upper case 2 while allowing a rotational motion between the upper case 2 and the lower case 3B.

Hereinabove, the second embodiment of the present invention has been described.

A slide bearing 1B according to the present embodiment is provided with the following as the detent mechanism for preventing a rotational motion of the center plate 4B relative to the lower case 3B: a plurality of the V-shaped recess portions 46 formed on the lower end portion 412 of the outer peripheral surface 411 of the radial bearing part 41 of the center plate 4B so as to be continuously aligned in circumferential direction; and the wedge-shaped projecting portions 60 equal to or less than a number of the V-shaped recess portions 46, formed on the inner peripheral surface 335 of the annular projection 33 of the lower case 3A so as to be aligned on a circumference with the same diameter as a circumference on which the V-shaped recess portions 46 are aligned, each being to be fitted into any one of the V-shaped recess portions 46. Therefore, placement of the center plate 4B onto the annular upper surface 331 of the annular projection 33 of the lower case 3B and then rotatable combination of the upper case 2 and the lower case 3B with the center plate 4B in between cause each wedge-shaped projecting portion 60 to be guided toward and fitted into any one of the V-shaped recess portions 46 even without positioning of the center plate 4B in relation to the lower case 3B, resulting in preventing a rotational motion of the center plate 4B relative to the lower case 3B. Accordingly, also for the present embodiment, provided is the slide bearing 1B with a detent mechanism capable of being assembled by a simple operation, as well as the slide bearing 1A according to the first embodiment of the present invention. Other advantages of the present embodiment are similar to those of the slide bearing 1A according to the first embodiment of the present invention.

In the present embodiment, a plurality of the V-shaped recess portions 46 are formed on the outer peripheral surface 411 of the radial bearing part 41 of the center plate 4B and the wedge-shaped projecting portions 60 equal to or less than a number of the V-shaped recess portions 46 are formed on the inner peripheral surface 335 of the annular projection 33 of the lower case 3B, as the detent mechanism for preventing a rotational motion of the center plate 4B relative to the lower case 3B. The present invention can include, but is not limited to, this structure. Alternative detent mechanism to be provided for preventing a rotational motion of the center plate 4B relative to the lower case 3B may be formed as follows: a plurality of the V-shaped recess portions 46 are formed on the inner peripheral surface 335 of the annular projection 33 of the lower case 3B so as to be continuously aligned in a circumferential direction; and the wedge-shaped projecting portions 60 equal to or less than a number of the V-shaped recess portions 46 are formed on the outer peripheral surface 411 of the radial bearing part 41 of the center plate 4A so as to be aligned on a circumference with the same diameter as a circumference on which the V-shaped recess portions 46 are aligned, thereby each being to be fitted into any one of the V-shaped recess portions 46.

In the present embodiment, the detent mechanism is provided for preventing a rotational motion of the center plate 4B relative to the lower case 3B. The present invention can include, but is not limited to, this structure. For example, thermoplastic resin of high-compression strength, such as a glass-containing polyamide resin, may be used for the upper case 2, thermoplastic resin excellent in sliding properties, such as a polyacetal resin impregnated with a lubricating oil as necessary, for the lower case 3B, and furthermore, a detent mechanism may be provided in order to preventing a rotation of the center plate 4B relative to the upper case 2.

For such case, the thrust bearing surface 42 is formed on the lower surface 402 of the thrust bearing part 40 of the center plate 4B, and the radial bearing surface 45 is formed on the outer peripheral surface 411 of the radial bearing part 41. A plurality of the V-shaped recess portions 46 may be formed on the inner peripheral surface 410 of the radial bearing part 40 so as to be continuously aligned in circumferential direction, and the wedge-shaped projecting portions 60 equal to or less than a number of the V-shaped recess portions 44 may be formed on the inner peripheral surface 251 of the annular groove 25 of the upper case 2 so as to be aligned on a circumference with the same diameter as a circumference on which the V-shaped recess portions 46 are aligned, thereby each being to be fitted into any one of the V-shaped recess portions 46.

Alternatively, a plurality of V-shaped recess portions 46 may be formed on the inner peripheral surface 251 of the annular groove 25 of the upper case 2 so as to be continuously aligned in circumferential direction, and the wedge-shaped projecting portions 60 equal to or less than a number of the V-shaped recess portions 46 may be formed on the inner peripheral surface 410 of the radial bearing part 40 so as to be aligned on a circumference with the same diameter as circumference on which the V-shaped recess portions 46 are aligned, thus each being to be fitted into any one of the V-shaped recess portions 46.

Such configurations cause each of the wedge-shaped projecting portions 60 to be guided toward and fitted into any one of the V-shaped recess portions 46 even without positioning of the center plate 4B in relation to the upper case 2, resulting from placement of the center plate 4B onto the annular upper surface 331 of the annular projection 33 of the lower case 3B and then rotatable combination of the upper case 2 and the lower case 3B with the center plate 4B in between. Thus prevented is a rotational motion of the center plate 4B relative to the upper case 2.

The present invention can include, but is not limited to, each of above embodiments: it will be obvious to those skilled in the art that various changes may be made without departing from the scope of the invention.

In each of the above embodiments, for example, as for corresponding center plate 4A, 4B, the radial bearing part 41 in substantial cylindrical shape is formed integrally with the thrust bearing part 40 so as to project axially downwardly from the inner edge of the annular thrust bearing part 40. The present invention can include the above embodiments, but is not limited to thereto; the radial bearing part 41 may be formed integrally with the thrust bearing part 40 so as to project axially upwardly from the inner edge of the thrust bearing part 40.

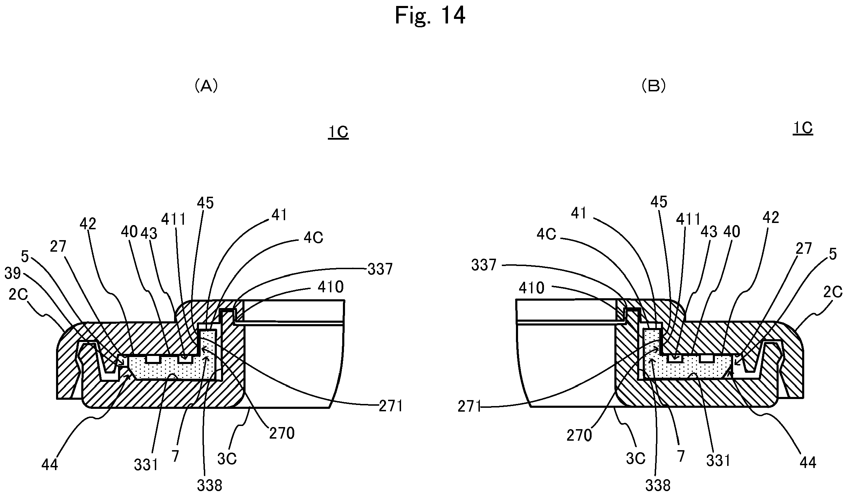

Fig. 14 illustrates a modification 1C of the slide bearing 1A, 1B, which includes Fig. 14 (A) as a view corresponding to Figs. 2 (A) and 9 (A), and Fig. 14 (B) as a view corresponding to Figs. 2(B) and 9(B). Here, each component having the same function as any component in the slide bearings 1A, 1B is indicated by the same reference symbols.

As illustrated in the figure, A slide bearing 1C has the following: an upper case 2C, a lower case 3C rotatably combined with the upper case 2C so as to form a annular space 5 between the upper case 2C and the lower case 3C; a center plate 4C placed in this annular space 5; and lubricating grease filled in the annular space 5 although not illustrated.

The center plate 4C includes an annular thrust bearing part 40 and a radial bearing part 41 formed integrally with the thrust bearing part 40 so as to project axially upwardly from an inner edge of the thrust bearing part 40.

The thrust bearing part 40 includes a thrust bearing surface 42 formed on an upper surface. When the center plate 4C is placed onto the lower case 3C so that a lower surface of the thrust bearing part 40 and an annular upper surface 331 of the lower case 3C are in contact with each other, the thrust bearing surface 42 slides over the annular lower surface 27 of the upper case 2C. A plurality of depressed grease-reservoirs 43 are formed on this thrust bearing surface 42 so as to be circumferentially aligned.

A plurality of V-shaped recess portions 44 are formed on an outer peripheral edge portion of the lower surface of the thrust bearing part 40 so as to be continuously aligned in a circumferential direction. A plurality of the V-shaped recess portions 44 are aligned on a circumference with the same diameter as a circumference on which a plurality of wedge-shaped projecting portions 39 formed on an outer circumference-side of the annular upper surface 331 of the lower case 3C locate, and form a detent mechanism together with these wedge-shaped projecting portions 39 in order to preventing a rotational motion of the center plate 4C relative to the lower case 3C.

The radial bearing part 41 includes a radial bearing surface 45 formed on an outer peripheral surface 411. When the center plate 4C is placed onto the lower case 3C so that the lower surface of the thrust bearing part 40 and the annular upper surface 331 of the lower case 3C are in contact with each other, the radial bearing part 41 is inserted into a annular groove 7 formed by a step portion 270 formed on an inner circumference-side of the annular lower surface 27 of the upper case 2C and a cylindrical portion 337 formed on an inner circumference-side of the annular upper surface 331 of the lower case 3C, and the radial bearing surface 45 slides over a side wall surface 271 of this step portion 270.

For the slide bearing 1C, a plurality of the V-shaped recess portions 44 are formed on the outer peripheral edge of the lower surface of the thrust bearing part 40 of the center plate 4C and the wedge-shaped projecting portions 39 equal to or less than a number of the V-shaped recess portions 44 are formed on the outer circumference-side of the annular upper surface 331 of the lower case 3C, as the detent mechanism for preventing rotational motion of the center plate 4C relative to the lower case 3C. The present invention can include this structure, but is not limited to thereto; alternative detent mechanism to be provided for preventing a rotation of the center plate 4C relative to the lower case 3C may be formed as follows: a plurality of the V-shaped recess portions 44 are formed on the outer circumference-side of the annular upper surface 331 of the lower case 3C so as to be continuously aligned in a circumferential direction; and the wedge-shaped projecting portions 39 equal to or less than a number of the V-shaped recess portions 44 are formed on the outer peripheral edge of the lower surface of the thrust bearing part 40 of the center plate 4C so as to be aligned on a circumference with the same diameter as a circumference on which the V-shaped recess portions 44 are aligned, thereby each being to be fitted into any one of the V-shaped recess portions 44.

Alternatively, alternative detent mechanism to be provided for preventing a rotational motion of the center plate 4C relative to the lower case 3C may be formed as follows (See Figs. 9 (A), (B)): a plurality of V-shaped recess portions 46 are formed so as to be continuously aligned in a circumferential direction, on one surface out of an inner peripheral surface 410 of the radial bearing part 41 of the center plate 4C and an outer peripheral surface 338 (facing this inner peripheral surface 410) of the cylindrical portion 337 formed on the inner circumference-side of the annular upper surface 331 of the lower case 3C; and wedge-shaped projecting portions 60 equal to or less than a number of the V-shaped recess portions 46 are formed on the other surface out of the surfaces 410, 338 so as to be aligned on a circumference with the same diameter as a circumference on which the V-shaped recess portions 46 are aligned, thereby each being to be fitted into any one of the V-shaped recess portions 46.

For the slide bearing 1C, the detent mechanism is provided for preventing a rotational motion of the center plate 4C relative to the lower case 3C, but not limited thereto; alternative detent mechanism may be provided for preventing a rotational motion of the center plate 4C relative to the upper case 2C.

In this case, the detent mechanism for preventing a rotational motion of the center plate 4C relative to the upper case 2C may be formed as follows: the thrust bearing surface 42 is formed on the lower surface of the thrust bearing part 40 of the center plate 4C and the radial bearing surface 45 is formed on the inner peripheral surface 410 of the radial bearing part 41; a plurality of the V-shaped recess portions 44 are formed on one surface out of the upper surface of the thrust bearing part 40 and the annular lower surface 27 of the upper case 2C so as to be continuously aligned in a circumferential direction; and the wedge-shaped projecting portions 39 equal to or less than a number of the V-shaped recess portions 44 are formed on the other surface so as to be aligned on a circumference with the same diameter as a circumference on which the V-shaped recess portions 44 are aligned, thereby each being to be fitted into any one of the V-shaped recess portions 44.

Alternatively, the detent mechanism for preventing a rotational motion of the center plate 4C relative to the upper case 2C may be formed as follows (See Figs. 9(A), s (B)): a plurality of the V-shaped recess portions 46 are formed on one surface out of the outer peripheral surface 411 of the radial bearing part 40 and the side wall surface 271 of the step portion 270 of the upper case 2C so as to be continuously aligned in a circumferential direction; and the wedge-shaped projecting portions 60 equal to or less than a number of the V-shaped recess portions 46 are formed on the other surface out of the surfaces 411, 271 so as to be aligned on a circumference with the same diameter as a circumference on which the V-shaped recess portions 46 are aligned, thus each being to be fitted into any one of the V-shaped recess portions 46.

For the slide bearing 1A - 1C according to each of the above embodiments and it's modification, when the thrust bearing surface 42 is formed on the upper surface 401 of the thrust bearing part 40 and the detent mechanism is provided for preventing a rotational motion of the center plate 4A - 4C relative to the lower case 3A - 3C, a lubricating sheet may be placed between the thrust bearing surface 42 and the annular lower surface 27 of the upper case body 21, thus improving sliding properties between the thrust bearing surface 42 and the annular lower surface 27 of the upper case body 21.

When the thrust bearing surface 42 is formed on the lower surface 402 of the thrust bearing part 40 and the detent mechanism is provided for preventing a rotational motion of the center plate 4A - 4C relative to the upper case 2,2C; in such a case, a lubricating sheet may be placed between the thrust bearing surface 42 and the annular upper surface 331 of the lower case body 31, thus improving sliding properties between the thrust bearing surface 42 and the annular upper surface 331 of the lower case body 31.

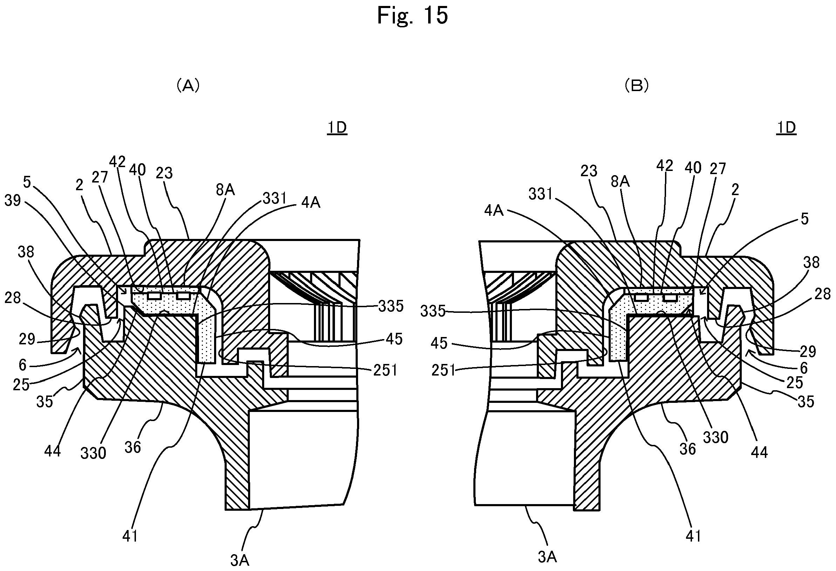

Fig. 15 illustrates a modification 1D of the slide bearing 1A, which includes Fig. 15(A) as a view corresponding to Fig. 2 (A) and Fig. 15 (B) as a view corresponding to Fig. 2 (B). Here, each component having the same function as any component in the slide bearing 1A, is indicated by the same reference symbols.

As illustrated in the figure, a slide bearing 1D has an upper case 2, a lower case 3A rotatably combined with the upper case 2 so as to form an annular space 5 between the upper case 2 and the lower case 3A, a center plate 4A and a lubricating sheet 8A both placed in this annular space 5, and lubricating grease filled in the annular space 5 although not illustrated.

The lubricating sheet 8A is made of thermoplastic plastic excellent in sliding properties, such as a fluorine resin, including PTFE and Modified PTFE obtained by copolymerization of TFE (tetrafluoroethylene) and a trace of other material (comonomers), polyacetal resin, polyethylene resin, polyamide resin, and polyphenylene sulfide resin; lubricant, such as PTFE (with proviso that the case of using PTFE or Modified PTFE as thermoplastic plastic is excluded), lubricating oil, silicone, and graphite, and/or reinforcement, such as aramid fibers, glass fibers, and carbon fibers, are added as necessary. The lubricating sheet 8A, which is a member in substantial ring-shape, is placed between a thrust bearing surface 42 formed on an upper surface 401 of a thrust bearing part 40 of the center plate 4A and an annular lower surface 27 (facing the thrust bearing surface 42) of a upper case body 21 of the upper case 2. Therefore, the thrust bearing surface 42 and the annular lower surface 27 of the upper case body 21 rotate relative to each other with the interposition of lubricating sheet 8A.

Thickness of the lubricating sheet 8A varies depending on the material used, may be, for example, 0.1mm - 1mm, preferably 0.2mm - 0.7mm. Preferably, both of a front surface and a back surface of the lubricating sheet 8A may be flat.

For the slide bearing 1A - 1C according to each embodiment and it's modification described above, when the thrust bearing surface 42 is formed on the upper surface 401 of the thrust bearing part 40, the radial bearing surface 45 is formed on the inner peripheral surface 410 of the radial bearing part 41, and the detent mechanism is provided for preventing a rotational motion of the center plate 4A - 4C relative to the lower case 3A - 3C; lubricating sheet may be placed between the thrust bearing surface 42 and the annular lower surface 27 of the upper case body 21 and between the radial bearing surface 45 and the facing surface of the upper case 2 (the inner peripheral surface 251 of the annular groove 25 of the upper case body 21 (in the case of the slide bearing 1A, 1B) or the side wall surface 271 of the step portion 270 formed on the inner circumference-side of the annular lower surface 27 of the upper case body 21 of the upper case 2 (in the case of the slide bearing 1C)) toward the radial bearing surface 45, thus improving sliding properties between the thrust bearing surface 42 and the annular lower surface 27 of the upper case body 21 and sliding properties between the radial bearing surface 45 and the facing surface of the upper case 2 toward the radial bearing surface 45.

When the thrust bearing surface 42 is formed on the lower surface 402 of the thrust bearing part 40, the radial bearing surface 45 is formed on the outer peripheral surface 411 of the radial bearing part 41, and the detent mechanism is provided for preventing a rotational motion of the center plate 4A - 4C relative to the upper case 2, 2C; lubricating sheet may be placed between the thrust bearing surface 42 and the annular upper surface 331 of the lower case body 31 and between the radial bearing surface 45 and the facing surface of the lower case 3 (the inner peripheral surface 335 of the annular projection 33 of the lower case body 31 (in the case of the slide bearings 1A, 1B) or the outer peripheral surface 338 of the cylindrical portion 337 formed on the inner circumference-side of the annular upper surface 331 of the lower case body 31 (in the case of the slide bearing 1C)) toward the radial bearing surface 45, thus improving sliding properties between the thrust bearing surface 42 and the annular upper surface 331 of the lower case body 31 and sliding properties between the radial bearing surface 45 and the facing surface of the lower case 3 toward the radial bearing surface 45.

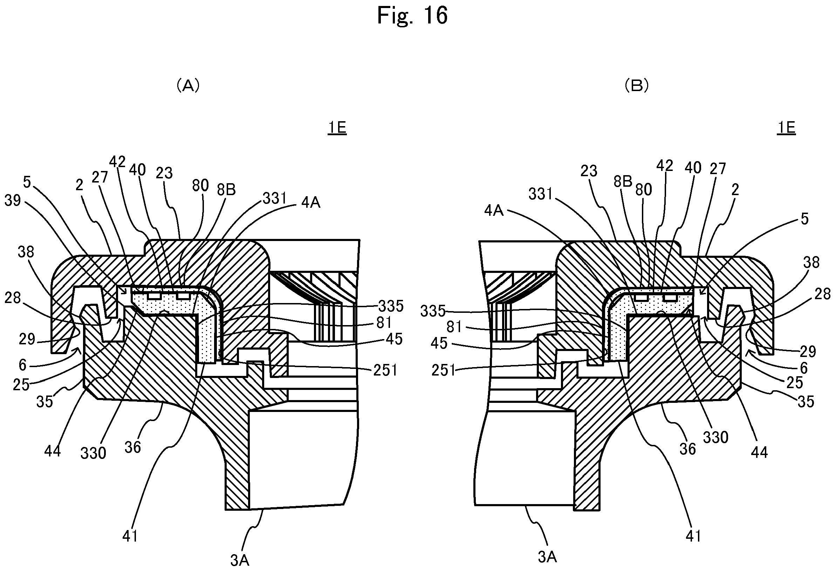

Fig. 16 illustrates a modification 1E of the slide bearing 1A, which includes Fig. 16(A) as a view corresponding to Fig. 2(A) and Fig. 16(B) as a view corresponding to Fig. 2(B). Here, each component having the same function as any component in the slide bearing 1A is indicated by the same reference symbols.

As illustrated in the figure, a slide bearing 1E has the following: an upper case 2; a lower case 3A rotatably combined with the upper case 2 to form an annular space 5 between the lower case 3A and the upper case 2; a center plate 4A and a lubricating sheet 8B both placed in the annular space 5; and lubricating grease, although not illustrated, filled in the annular space 5.

The lubricating sheet 8B includes the following: an annular thrust sheet part 80 placed between a thrust bearing surface 42 formed on an upper surface 401 of a thrust bearing part 40 of the center plate 4A and an annular lower surface 27 (facing the thrust bearing surface 42) of an upper case body 21 of the upper case 2; and a radial sheet part 81 in substantial cylindrical-shape placed between a radial bearing surface 45 formed on an inner peripheral surface 410 of a radial bearing part 41 of the center plate 4A and an inner peripheral surface 251 (facing the radial bearing surface 45) of an annular groove 25 of the upper case body 21. Here, material of the lubricating sheet 8B and thickness of each of the thrust sheet part 80 and the radial sheet part 81 are similar to those of the lubricating sheet 8A of the modification 1D illustrated in Fig. 15.

In the modification 1E illustrated in Fig. 16, the annular thrust sheet part 80 and the radial sheet part 81 in substantial cylindrical shape are in an integral formation with each other to form the lubricating sheet 8B, but not limited thereto; the annular thrust sheet part 80 and the radial sheet part 81 in substantial cylindrical shape each may be formed as individual member.

The slide bearing according to the present invention is widely applicable to such slide bearing that supports a load on a shaft member while allowing a rotational motion of the shaft member in various mechanisms, including the strut type suspension.

### Reference Signs List

1A, 1B, 1C, 1D, 1E: slide bearing; 2, 2C: upper case; 3A, 3B, 3C: lower case; 4A, 4B, 4C: center plate; 5: annular space; 6: labyrinth; 7: annular groove; 8A, 8B: lubricating sheet; 10: receiving hole of slide bearing 1A, 1B; 20: insertion hole of upper case 2; 21: upper case body; 22: upper surface of upper case body 21; 23: attachment surface of upper case body 21; 24: lower surface of upper case body 21; 25: annular groove of upper case body 21; 26: groove bottom of annular groove 25; 27: annular lower surface of upper case body 21; 28: protective wall of upper case body 21; 29: snap fitting part; 30: insertion hole of lower case 3A,3B; 31: lower case body; 32: upper surface of lower case body 31; 33: annular projection of lower case body 31; 34: outer peripheral surface of lower case body 31; 35: flange; 36: lower surface of flange 35; 37: outer peripheral surface of flange 35; 38: interlocked part of lower case body 31; 39, 60: wedge-shaped projecting portion; 40: thrust bearing part; 41: radial bearing part; 42: thrust bearing surface; 43: grease reservoir; 44, 46: V-shaped recess portion; 80: thrust sheet part; 81: radial sheet part; 250: outer peripheral surface of annular groove 25; 251: inner peripheral surface of annular groove 25; 270: step portion; 271: side wall surface of step portion 270; 330: upper surface of annular projection 33; 331: annular upper surface; 332: outer peripheral edge of annular upper surface 331; 335: inner peripheral surface of annular projection 33; 337: cylindrical portion; 338: outer peripheral surface of cylindrical portion 337; 390: top portion of wedge-shaped projecting portion 39; 401: upper surface of thrust bearing part 40; 402: lower surface of thrust bearing part; 403: outer peripheral edge portion of lower surface 402; 410: inner peripheral surface of radial bearing part 41; 411: outer peripheral surface of radial bearing part 41; 412: lower end portion of outer peripheral surface 411; 440: bottom portion of V-shaped recess portions 44; 460: bottom portion of V-shaped recess portions 46; 600: end part of wedge-shaped projecting portion 60

## Claims

1. A slide bearing for supporting a load of an object of support, comprising:
a center plate having a substantial annular shape;
an upper case having an annular lower surface facing an upper surface of the center plate;
a lower case having a annular upper surface facing a lower surface of the center plate, the lower case being rotatably coupled with the upper case, the center plate being interposed between the lower case and the upper case; and
a detent mechanism preventing a rotational motion of the center plate relative to at least one of the lower case and the upper case,
the detent mechanism comprising:
a plurality of recess portions continuously aligned in a circumferential direction; and
projecting portions equal to or less than a number of the recess portions, being aligned on a circumference having a same diameter as a diameter of a circumference on which the recess portions are aligned, to fit each of the projecting portions into any one of the recess portions.

2. A slide bearing according to Claim 1, wherein:
the recess portions and the projecting portions have a substantial V-shape and a substantial wedge shape, respectively.

3. A slide bearing according to any one of Claims 1 - 2, wherein:
the projecting portions are fitted into any one of the recess portions, upon occurrence of applying the load of the object of support to the slide bearing.

4. A slide bearing according to any one of Claims 1 - 3, wherein:
the detent mechanism is configured to prevent the rotational motion of the center plate relative to the lower case;
the recess portions are provided on one surface out of the lower surface of the center plate and the annular upper surface of the lower case; and
the projecting portions are provided on another surface out of the lower surface of the center plate and the annular upper surface of the lower case.

5. A slide bearing according to any one of Claims 1 - 3, wherein:
the detent mechanism is configured to prevent the rotational motion of the center plate relative to the upper case;
the recess portions are provided on one surface out of the upper surface of the center plate and the annular lower surface of the upper case; and
the projecting portions are provide on another surface out of the upper surface of the center plate and the annular lower surface of the upper case.

6. A slide bearing according to any one of Claims 1 - 3, wherein:
the center plate comprises a cylindrical portion provided on the lower surface of the center plate;
the lower case further comprises an inner peripheral surface facing an outer peripheral surface of the cylindrical portion of the center plate;
the detent mechanism is configured to prevent the rotational motion of the center plate relative to the lower case;
the recess portions are provided on one surface out of the outer peripheral surface of the cylindrical portion of the center plate and the inner peripheral surface of the lower case; and
the projecting portions are provided on another surface out of the outer peripheral surface of the cylindrical portion of the center plate and the inner peripheral surface of the lower case.

7. A slide bearing according to any one of Claims 1 - 3, wherein:
the center plate comprises a cylindrical portion provided on the lower surface of the center plate;
the upper case further comprises an outer peripheral surface facing an inner peripheral surface of the cylindrical portion of the center plate;
the detent mechanism is configured to prevent the rotational motion of the center plate relative to the upper case;
the recess portions are provided on one surface out of the inner peripheral surface of the cylindrical portion of the center plate and the outer peripheral surface of the upper case; and
the projecting portions are provided on another surface out of the inner peripheral surface of the cylindrical portion of the center plate and the outer peripheral surface of the upper case.

8. A slide bearing according to any one of Claims 1 - 3, wherein:
the center plate comprises a cylindrical portion provided on the upper surface of the center plate;
the upper case further comprises an inner peripheral surface facing an outer peripheral surface of the cylindrical portion of the center plate;
the detent mechanism is configured to prevent a rotational motion of the center plate relative to the upper case;
the recess portions are provided on one surface out of the outer peripheral surface of the cylindrical portion of the center plate and the inner peripheral surface of the upper case; and
the projecting portions are provided on another surface out of the outer peripheral surface of the cylindrical portion of the center plate and the inner peripheral surface of the upper case.

9. A slide bearing according to any one of Claims 1 - 3, wherein:
the center plate comprises a cylindrical portion provided on the upper surface of the center plate;
the lower case further comprises an outer peripheral surface facing an inner peripheral surface of the cylindrical portion of the center plate;
the detent mechanism is configured to prevent the rotational motion of the center plate relative to the lower case;
the recess portions are provided on one surface out of the inner peripheral surface of the cylindrical portion of the center plate and the outer peripheral surface of the lower case; and
the projecting portions are provided on another surface out of the inner peripheral surface of the cylindrical portion of the center plate and the outer peripheral surface of the lower case.

10. A slide bearing according to any one of Claims 4, 6 and 9, further comprising an annular lubricating sheet placed between the upper surface of the center plate and the annular lower surface of the upper case.

11. A slide bearing according to any one of Claims 6 and 9, wherein:
the upper case further comprises a facing surface toward the cylindrical portion of the center plate; and
the slide bearing further comprises:
an annular lubricating sheet placed between the upper surface of the center plate and the annular lower surface of the upper case; and
a cylindrical lubricating sheet placed between the cylindrical portion of the center plate and the facing surface of the upper case.

12. A slide bearing according to any one of Claims 5, 7 and 8, further comprising an annular lubricating sheet placed between the lower surface of the center plate and the annular upper surface of the lower case.

13. A slide bearing according to any one of Claims 7 and 8, wherein:
the lower case further comprises a facing surface toward the cylindrical portion of the center plate; and
the slide bearing further comprises:
an annular lubricating sheet placed between the lower surface of the center plate and the annular upper surface of the lower case; and
a cylindrical lubricating sheet placed between the cylindrical portion of the center plate and the facing surface of the lower case.

14. A slide bearing according to any one of Claims 11 and 13, wherein:
the annular lubricating sheet and the cylindrical lubricating sheet are integrally formed each other.

15. A slide bearing according to any one of Claims 1 - 14, wherein:
the slide bearing is capable of supporting a load of a vehicle body applied to a strut type suspension while allowing a rotational motion of a strut assembly of the strut type suspension;
the upper case is configured to be attached to a mounting mechanism for mounting the strut assembly onto the vehicle body, with the strut assembly inserted into the upper case; and
the lower case is configured to be attached to a spring sheet at a top portion of a coil spring incorporated into to the strut assembly, with the strut assembly inserted into the lower case.
